# EUROPÄISCHE PATENTSCHRIFT

(11) **EP 0 477 523 B1**
(45) Veröffentlichungstag und Bekanntmachung des Hinweises auf die Patenterteilung: **01.03.1995**
(21) Anmeldenummer: 91113642.2
(22) Anmeldetag: 14.08.1991
(51) Int. Cl.: B60T 8/48, B60T 8/34, F16K 17/04

(54) **Druckbegrenzungsventil, insbesondere für hydraulische Kraftfahrzeug-Bremsanlagen**
Pressure limiting valve, especially for hydraulic vehicle brake systems
Soupape de limitation de pression, notamment pour systèmes hydrauliques de freinage de véhicules automobiles

(30) Priorität: 26.09.1990 DE 4030424
(43) Veröffentlichungstag der Anmeldung: 01.04.1992
(73) Patentinhaber: ROBERT BOSCH GMBH, 70442 Stuttgart (DE)
(72) Erfinder: Müller, Klaus, Dr.-Ing., W-7146 Tamm (DE); Schäfer, Ernst-Dieter, Dipl.-Ing. (FH), W-7016 Gerlingen (DE)

(56) Entgegenhaltungen:
- GB-A- 2 191 552
- US-A- 4 123 118

## Beschreibung

### Stand der Technik

Die Erfindung geht aus von einem Druckbegrenzungsventil nach der Gattung des Hauptanspruchs.

Es ist schon ein solches Druckbegrenzungsventil zur Verwendung in einer hydraulischen Kraftfahrzeug-Bremsanlage geschaffen worden, welches dazu dient, den im Antriebsschlupfregelbetrieb von einer Pumpe erzeugten Arbeitsdruck zu begrenzen, in dem in einem Bremsleitungsabschnitt gefördertes Druckmittel über das Druckbegrenzungsventil in einen Vorratsbehälter abgesteuert wird. Das Druckbegrenzungsventil stellt daher ein den Bremskreis öffnendes Schaltglied dar. Im normalen Bremsbetrieb, bei dem der Bremsdruck durch Betätigung eines Hauptbremszylinders erzeugt wird, muß jedoch sichergestellt sein, daß kein Druckmittel über das Druckbegrenzungsventil aus dem Bremskreis entweicht. Dies wird durch Beaufschlagen des Stößels am dritten Anschluß des Druckbegrenzungsventils mit dem als Steuerdruck wirkenden Bremsdruck unterstützt. Da beim Druckbegrenzungsventil aber der Stößel mit dem Ventilschließkörper fest verbunden ist und Reibungskräften am Dichtungsring unterliegt, ist das Schaltverhalten des Ventils beim Begrenzen des Pumpenarbeitsdruckes durch Hysterese beeinträchtigt.

Aus US-A-4,123,118 (Figuren 9 und 12) sind ebenfalls Ventile gleicher oder ähnlicher Bauform bekannt, mit denen im Blockierschutzbetrieb einer Fahrzeug-Bremsanlage Druckmittel aus einem Radbremszylinder in Abhängigkeit vom Druck des Hauptbremszylinders absteuerbar ist. Hierzu besitzen die Ventile einen mit dem Ventilschließkörper vereinigten oder von diesem getrennten, jedoch kräftemäßig stets verbundenen Stößel, welcher einen Dichtungsring durchgreift und mit seiner schließkörperabgewandten Stirnseite dem Druck des Hauptbremszylinders unterliegt Auch bei der Bauform nach Figur 12 tritt Hysterese auf.

### Vorteile der Erfindung

Das erfindungsgemäße Druckbegrenzungsventil mit den kennzeichnenden Merkmalen des Hauptanspruchs hat demgegenüber den Vorteil, daß das Schaltverhalten des Ventils nur unter der Wirkung des Arbeitsdrucks von auf den Stößel einwirkenden größeren Kräften unbeeinflußt ist, weil der Ventilschließkörper und der Stößel entkoppelt sind. Beim steuerdruckfreien Öffnen des Druckbegrenzungsventils wird nämlich der Stößel zurückgestoßen und vom Dichtungsring so lange in dieser Lage gehalten, bis Steuerdruck am dritten Anschluß wirksam wird und den Stößel gegen den Ventilschließkörper zurückbewegt.

Durch die im Unteranspruch aufgeführten Maßnahmen wird in vorteilhafter Weise einerseits eine kräftemäßig günstige Ankoppelung des Stößels an das Ventilschließglied und andererseits eine kippmomentarme Lagerung von Stößel und Ventilschließglied erzielt.

### Zeichnung

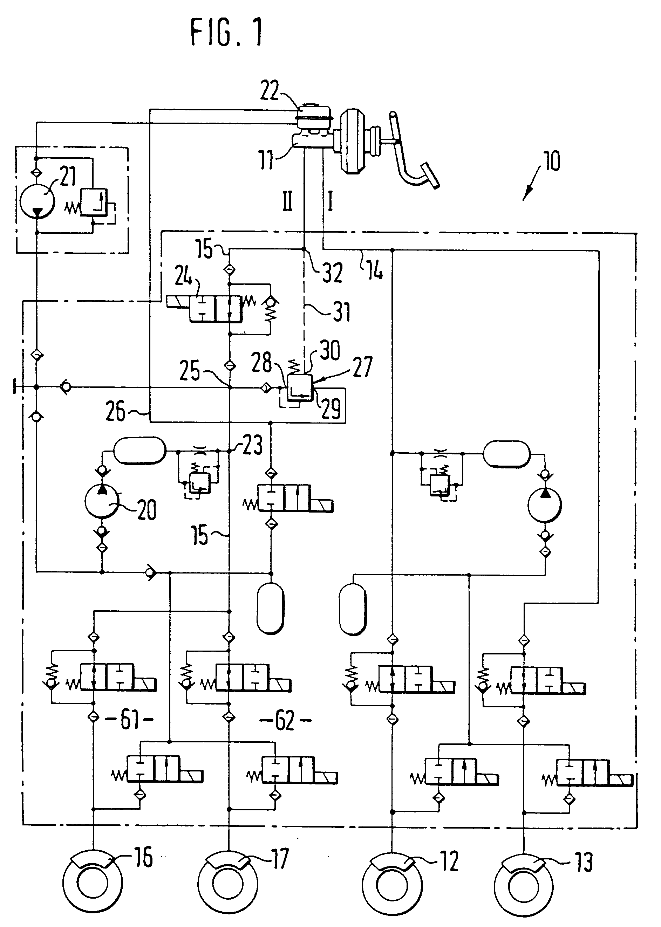

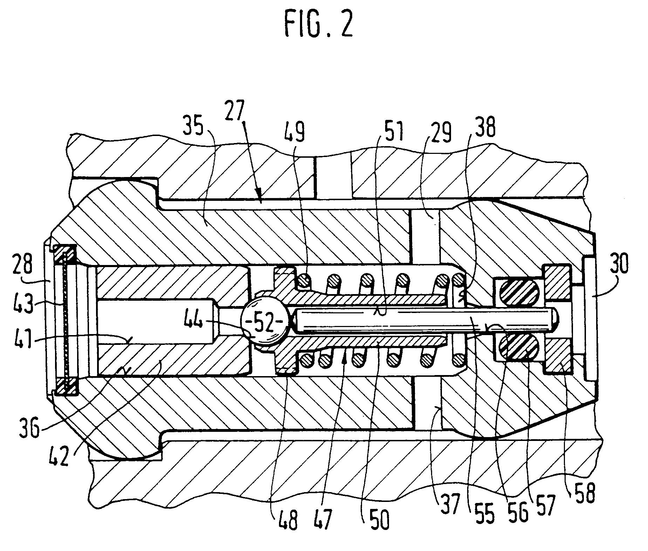

Ein Ausführungsbeispiel der Erfindung ist in der Zeichnung vereinfacht dargestellt und in der nachfolgenden Beschreibung näher erläutert. Es zeigen Figur 1 ein Schaltschema einer Kraftfahrzeug-Bremsanlage mit einem an eine Bremsleitung angeschlossenes Druckbegrenzungsventil und Figur 2 einen Längsschnitt des Druckbegrenzungsventils.

### Beschreibung des Ausführungsbeispiels

Die in Figur 1 dargestellte hydraulische Kraftfahrzeug-Bremsanlage 10 hat einen pedalbetätigbaren Hauptbremszylinder 11, an den zwei Bremskreise I und II angeschlossen sind. Der Bremskreis I weist eine vom Hauptbremszylinder 11 zu Radbremsen 12 und 13 nicht angetriebener Fahrzeugräder führende Bremsleitung 14 auf. Eine Bremsleitung 15 des Bremskreises ist mit Radbremsen 16 und 17 angetriebener Fahrzeugräder verbunden. Bei Betätigung des Hauptbremszylinders 11 ist durch Verschieben von Druckmittelmengen durch die Bremsleitungen 14 und 15 Bremsdruck in den Radbremsen 12, 13, 16 und 17 erzeugbar.

Die Bremsanlage 10 ist auch mit einer den angetriebenen Fahrzeugrädern zugeordneten Einrichtung zur Antriebsschlupfregelung ausgestattet. Hierzu besitzt die Bremsanlage 10 eine Hochdruckpumpe 20, welcher mit einer zweiten Pumpe 21 Druckmittel aus einem Druckmittel-Vorratsbehälter 22 des Hauptbremszylinders 11 zuführbar ist. Ausgangsseitig ist die Pumpe 20 am Anschlußpunkt 23 mit der Bremsleitung 15 verbunden. Damit die Pumpe 20 Bremsdruck in den Radbremsen 16 und 17 aufbauen kann, ist zwischen dem Hauptbremszylinder 11 und dem Anschlußpunkt 23 in der Bremsleitung 15 ein Absperrventil 24 angeordnet. Zwischen diesem Absperrventil 24 und dem Anschlußpunkt 23 geht von der Bremsleitung 15 am Anschlußpunkt 25 eine Rückführleitung 26 für Druckmittel zum Vorratsbehälter 22 aus. In der Rückführleitung 26 ist ein Druckbegrenzungsventil 27 angeordnet, mit dem der von der Pumpe 20 erzeugbare Arbeitsdruck durch Absteuern von Druckmittelmengen in den Druckmittel-Vorratsbehälter 22 begrenzt werden kann. Das Druckbegrenzungsventil 27 hat einen ersten Anschluß 28 für die von der Bremsleitung 15 kommende Rückführleitung 26. Von einem zweiten Anschluß 29 des Druckbegrenzungsventils 27 ist die Rückführleitung 26 zum Druckmittel-Vorratsbehälter 22 fortgesetzt. Außerdem weist das Druckbegrenzungsventil 27 einen dritten Anschluß 30 für eine Steuerleitung 31 auf, welche von einem zwischen dem Hauptbremszylinder 11 und dem Absperrventil 24 liegenden Anschlußpunkt 32 der Bremsleitung 15 herangeführt ist.

Die gegenständliche Ausgestaltung des Druckbegrenzungsventils 27 ist in Figur 2 dargestellt:
Das Druckbegrenzungsventil 27 besitzt ein Gehäuse 35 mit einer abgestuften Längsbohrung 36. Am in der Zeichnung linken Ende der Längsbohrung 36 befindet sich der erste Anschluß 28 für die Rückführleitung 26. Deren zweiter Anschluß 29 ist durch eine Querbohrung 37 gegeben, welche die Längsbohrung 36 nahe einer Bohrungsstufe 38 kreuzt. Mit Abstand abgewandt vom rechten Ende der Längsbohrung 36 befindet sich der dritte Anschluß 30 für die Steuerleitung 31.

Vom ersten Anschluß 28 her ist in die Längsbohrung 36 des Gehäuses 35 ein ebenfalls eine Längsbohrung 41 aufweisender Ventilsitzkörper 42 eingepreßt. Dem Ventilsitzkörper 42 ist ein die Längsbohrung 36 auf Seiten des ersten Anschlusses 28 abschließender Filterkörper 43 vorgesetzt. An dem der Bohrungsstufe 38 zugewandten Endabschnitt der Längsbohrung 41 ist der Ventilsitzkörper 42 mit einem Ventilsitz 44 versehen.

In der Längsbohrung 36 des Gehäuses 35 befindet sich zwischen dem Ventilsitzkörper 42 und der Bohrungsstufe 38 ein Ventilschließkörper 47, welcher ventilsitzseitig einen Führungsbund 48 hat. An diesem Bund 48 greift eine vorgespannte Druckfeder 49 an, welche an der Bohrungsstufe 38 abgestützt ist. Der Ventilschließkörper 47 hat einen vom Führungsbund 48 ausgehenden, sich gegen die Bohrungsstufe 38 erstreckenden zylindrischen Ansatz 50 geringeren Durchmessers sowie eine durchgehende Längsbohrung 51. Diese ist im Bereich des Bundes 48 durch eine am Ventilschließkörper 47 aufgenommene Kugel 52 als dem Ventilsitz 44 zugeordnetes Ventilschließglied abgeschlossen. Die Längsbohrung 51 kann auch als vor der Kugel 52 endende Sacklochbohrung ausgebildet sein.

In der Längsbohrung 51 des Ventilschließkörpers 47 ist ein als glatter zylindrischer Stift ausgebildeter Stößel 55 aufgenommen, der sich über die Bohrungsstufe 38 hinaus nahezu bis zum dritten Anschluß 30 des Druckbegrenzungsventils 27 erstreckt. Nahe der Bohrungsstufe 38 ist der Stößel 55 in einem an die Längsbohrung 36 anschließenden Führungsabschnitt 56 gelagert. Zwischen diesem Führungsabschnitt 56 und dem dritten Anschluß 30 sind im Gehäuse 35 des Druckbegrenzungsventils 27 ein vom Stößel 55 durchdrungender Dichtungsring 57 und eine Rückhaltescheibe 58 aufgenommen. Wie man aus Figur 2 deutlich erkennt, sind sämtliche in der Längsbohrung 36 des Gehäuses 35 aufgenommenen Elemente des Druckbegrenzungsventils 27 koaxial angeordnet.

Das Druckbegrenzungsventil 27 hat im Zusammenwirken mit der Kraftfahrzeug-Bremsanlage 10 folgende Funktionsweise:
Bei einer vom Fahrer des Kraftfahrzeugs ausgelösten Bremsung werden der erste Anschluß 28 und der dritte Anschluß 30 des Druckbegrenzungsventils 27 mit Druck beaufschlagt. Dabei wirkt ventilsitzseitig auf den Ventilschließkörper 47 eine Öffnungskraft, welche durch die Schließkraft der Druckfeder 49 kompensiert wird. Die den Ansprechdruck des Druckbegrenzungsventils 27 durch ihre Vorspannung bestimmende Druckfeder 49 wird durch eine zusätzliche Schließkraft unterstützt, welche der Steuerdruck am dritten Anschluß 30 auf die freie Stirnseite des Stößels 55 hervorruft. Diese zusätzliche Schließkraft wird vom Stößel 55 auf die Kugel 52 des Ventilschließkörpers 47 übertragen, was zusätzlich schließend auf das Druckbegrenzungsventil 27 wirkt. Ein Abströmen von Druckmittel vom ersten Anschluß 28 zum zweiten Anschluß 29 des Druckbegrenzungsventils 27 ist damit sicher verhindert.

Beim Antriebsschlupfregelbetrieb schließt das Absperrventil 24 und trennt die Verbindung zwischen dem Hauptbremszylinder 11 und den Radbremsen 16 und 17, damit die eingeschaltete Pumpe 20 Bremsdruck erzeugen kann. Da der Fahrer des Fahrzeugs hierbei keine Bremsung auslöst, wirkt am dritten Anschluß 30 des Druckbegrenzungsventils 27 kein Steuerdruck. Dagegen erzeugt die Pumpe 20 am ersten Anschluß 28 des Druckbegrenzungsventils 27 einen dessen Ansprechdruck überschreitenden Arbeitsdruck, so daß die Schließkraft der Druckfeder 49 überwunden wird und die Kugel 52 vom Ventilsitz 44 abhebt. (Der an den Radbremsen 16, 17 wirkende, gegenüber dem Arbeitsdruck niedrigere Bremsdruck wird durch Ventileinrichtungen 61 und 62 moduliert.) Beim Abheben der Kugel 52 vom Ventilsitz 44 wird auch der Stößel 55 unter Überwindung der von Dichtungsring 57 hervorgerufenen Reibungskraft gegen den dritten Anschluß 30 zurückgestoßen. Druckmittel kann nun vom ersten Anschluß 28 zum zweiten Anschluß 29 abströmen. Beim folgenden Schließvorgang des Druckbegrenzungsventils 27 wird die Kugel 52 aufgrund der Schließkraft der Druckfeder 49 zur Anlage am Ventilsitz 44 zurückbewegt, wobei der Stößel 55 jedoch in seiner zurückgestoßenen Stellung verharrt. Öffnungs- und Schließvorgänge des Druckbegrenzungsventils 27 können jetzt unbeeinflußt von Reibungskräften des Dichtungsringes 57 ablaufen. Erst bei einem vom Fahrer ausgelösten Bremsvorgang wird unter Überwindung der Reibungskräfte am Dichtungsring 57 der Stößel 55 in seine gezeichnete Stellung zurückbewegt.

Durch entsprechende Bemessung des Spiels zwischen dem Führungsbund 48 des Ventilschließkörpers 47 und der Längsbohrung 36 des Gehäuses 35, zwischen dem Führungsabschnitt 56 der Längsbohrung 36 und dem Stößel 55 sowie zwischen der Längsbohrung 51 des Ventilschließkörpers 47 und dem Stößel 55 ist sichergestellt, daß Fluchtungsfehler zwischen dem Ventilsitz 44 und der Kugel 52 ausgeglichen und unerwünschte Dreipunktlagerungen der beweglichen Bauteile des Druckbegrenzungsventils 27 vermieden sind.

## Patentansprüche

1. Druckbegrenzungsventil (27), insbesondere für hydraulische Kraftfahrzeug-Bremsanlagen (10),
- mit einem Gehäuse (35) mit einem ersten Anschluß (28) für ein unter Arbeitsdruck stehendes Druckmittel, einem zweiten Anschluß (29) für abgesteuertes Druckmittel und einem Steuerdruck aussetzbaren dritten Anschluß (30),
- mit einem am Gehäuse (35) angeordneten, mit dem ersten Anschluß (28) in Verbindung stehenden Ventilsitz (44),
- mit einem entgegen der Kraft einer Druckfeder (49) im Gehäuse (35) längsverschiebbar geführten, wenigstens mittelbar am Ventilsitz (44) angreifenden Ventilschließkörper (47),
- und mit einem sich ventilsitzabgewandt in Bewegungsrichtung des Ventilschließkörpers (47) erstreckenden, zylindrischen Stößel (55), welcher unter Durchdringung eines Dichtungsringes (57) am dritten Anschluß (30) endet,
dadurch gekennzeichnet,
daß der Stößel (55) als in einer Längsbohrung (51) des Ventilschließkörpers (47) relativ beweglich zu diesem aufgenommener Stift ausgebildet ist, der lediglich unter der Wirkung des Steuerdrucks am Ventilschließkörper (47) angreift.

2. Druckbegrenzungsventil (27) nach Anspruch 1, dadurch gekennzeichnet, daß der Stößel (55) an der vom Ventilsitz (44) abgewandten Seite eines als Kugel (52) ausgebildeten Ventilschließgliedes anzugreifen vermag, welches am Ventilschließkörper (47) aufgenommen ist.

## Claims

1. Pressure limiting valve (27), in particular for hydraulic motor-vehicle brake systems (10),
- having a housing (35) with a first connection (28) for a pressure medium under working pressure, a second connection (29) for spilled pressure medium and a third connection (30) which can be subjected to a control pressure,
- having a valve seat (44) arranged on the housing (35) and in connection with the first connection (28),
- having a valve closing body (47) guided so that it can be displaced longitudinally in the housing (35) against the force of a compression spring (49) and acting at least indirectly on the valve seat (44),
- and having a cylindrical push-rod (55), which extends in the direction of motion of the valve closing body (47) away from the valve seat, penetrates a sealing ring (57) and ends at the third connection (30),
characterized in that the push-rod (55) is configured as a pin which is accommodated in a longitudinal hole (51) of the valve closing body (47), which can be moved relative to the latter and which only acts on it under the action of the control pressure.

2. Pressure limiting valve (27) according to Claim 1, characterized in that the push-rod (55) can act on the side facing away from the valve seat (44) of a valve closing element, which is configured as a ball (52) and is accommodated on the valve closing body (47).

## Revendications

1. Soupape de limitation de pression (27), notamment pour des installations de freins hydrauliques de véhicules automobiles (10) comprenant :
- un boîtier (35) avec un premier branchement (28) pour le liquide à la pression de travail, un second branchement (29) pour évacuer le liquide sous pression et un troisième branchement (30) qui peut recevoir une pression de commande,
- un siège de soupape (44) prévu sur le boîtier (35) et communiquant avec le premier branchement (28),
- un organe d'obturation de soupape (47) guidé en coulissement longitudinal dans le boîtier (35), contre la force développée par un ressort de compression (49), qui agit au moins indirectement sur le siège de soupape (44),
- et un poussoir cylindrique (55) s'étendant dans la direction de mouvement de l'organe d'obturation de soupape (47) en étant situé du côté opposé au siège de soupape, ce poussoir se terminant au niveau du troisième branchement (30) après avoir traversé un joint annulaire d'étanchéité (57),
caractérisé en ce que le poussoir (55) est réalisé sous la forme d'une tige logée avec une mobilité relative dans un perçage longitudinal (51) de l'organe d'obturation de soupape (47), cette tige agissant sur l'organe d'obturation de soupape (47) uniquement sous l'action de la pression de commande.

2. Soupape de limitation de pression (27) selon la revendication 1, caractérisée en ce que le poussoir peut agir sur le côté de l'organe d'obturation de soupape en forme de bille (51) non situé du côté du siège de soupape (44), cet organe d'obturation étant logé dans le corps d'obturation de soupape (47).
